# EUROPEAN PATENT APPLICATION

(11) **EP 4 741 307 A1**
(43) Date of publication of application: **13.05.2026**
(21) Application number: 25213820.1
(22) Date of filing: 06.11.2025
(51) Int. Cl.: B65D 5/74, B65D 50/04

(54) **CHILD-RESISTANT CLOSURE, CARTON PACKAGE AND METHODS OF PRODUCING THE SAME**

(30) Priority: 12.11.2024 SE 2451135
(71) Applicant: Modulpac AB, 341 50 Lagan (SE)
(72) Inventor: Svensson, Micael, 331 35 Värnamo (SE)
(74) Representative: Industripatent i Växjö AB

(57) **Abstract**

A child-resistant closure (18) configured to be attached to a carton package for a pourable household chemical comprises an attachment collar (20); a circular spout (22) extending along a spout axis (A); and a cap arrangement (24) comprising an attachment ring (28) and a reclosable flip cap (26) held to the attachment ring (28) by a hinge (30). The flip cap (26) comprises a cap mantle (36) having a locking hook (38) extending radially inwards towards the spout axis (A), and a radially outer face (22c) of the spout (22) comprises a locking track (40) configured to receive the locking hook (38). The cap arrangement (24) is rotatable on the spout (22) about the spout axis (A) with the locking hook (38) received in the locking track (40). The cap mantle (36) comprises a pair of opposing depression areas (42a, 42b) separated from the spout (22) by a mantle gap enabling the depression areas (42a, 42b) to be pressed towards the spout (22), such that the cap mantle (36) is resiliently ovalized and moves the locking hook (38) radially outwards from the locking track (40).

## Description

### Field of the invention

The present invention relates to a child-resistant closure configured to be attached to a carton package for household chemicals, to a carton package provided with such a closure, and to methods of producing such closures and carton packages.

### Background

Pourable household chemicals are generally sold in plastic bottles. However, there is a general strive in the packaging business to reduce the amounts of plastics used for packages, both for environmental reasons and for reasons of cost. Various types of household chemicals, such as soap, are therefore also sold in plastic bags intended for re-filling plastic bottles already in use. There is however a need to further reduce the use of plastics, as well as to facilitate the use of household chemicals for the end user.

### Summary

It is an object of the present invention to solve, or at least mitigate, parts or all of the above mentioned problems. To this end, there is provided a child-resistant closure configured to be attached to a carton package for a pourable household chemical, the closure comprising an attachment collar extending along an attachment plane and having an attachment face configured to be attached to an interior face of the carton package; a spout extending from the attachment collar along a spout axis, the spout having a circular cross-section in a plane perpendicular to the spout axis; and a cap arrangement comprising an attachment ring rotatably attached to the spout, a hinge, and a reclosable flip cap held to the attachment ring by the hinge, the flip cap being movable between a fully closed position in which it closes a pouring outlet of the spout, and an open position in which the pourable household chemical may be poured from the pouring outlet, by pivoting the flip cap about the hinge, wherein the flip cap comprises a cap mantle at least partially circumferentially surrounding an outer perimeter of the pouring outlet of the spout, wherein an inside face of the cap mantle comprises, opposite to the hinge across the spout, a locking hook extending radially inwards towards the spout axis, and a radially outer face of the spout comprises a locking track configured to receive the locking hook when the flip cap is in the fully closed position, the locking track extending circumferentially about the spout axis, wherein the cap arrangement is rotatable in relation to the spout about the spout axis with the locking hook received in the locking track, wherein the cap mantle further comprises, between the hinge and the locking hook, a pair of opposing depression areas separated from the spout by a mantle gap enabling the depression areas of the mantle to be pressed towards the spout, such that the cap mantle is resiliently ovalized and moves the locking hook in a direction radially outwards from the locking track. Such a closure requires multiple simultaneous actions for opening, which is generally desired from a child-resistant closure; by pressing the depression areas towards the spout / towards each other, the locking hook is moved in a direction out of the locking track / in a direction away from the hinge, and the flip cap can only thereafter be opened by pivoting the flip cap about the hinge. The closure also adds a further child-resistant safety feature; by allowing the closure to be rotated about the spout axis, the child receives no feedback that it attempts to open the closure in the wrong way. Instead, the flip cap is likely to be mistaken for a screw cap, and the child may occupy itself with trying to unscrew the flip cap from the spout until it catches the attention of an adult. Through the provision of a compact and simple, yet child-resistant, closure for a carton package, an inexpensive and environmentally friendly packaging may be obtained for household chemicals which may need to be kept out of reach for children. Suitable household chemicals for such packaging may be, for example, liquid or powder detergent for laundry, dishwashing and/or household cleaning, liquid soap, shampoo, lubricants such as engine oil, etc. The extent of the depression areas may be indicated to the user by e.g. an embossment, such as by friction protrusions formed in the outer surface of the cap mantle. Even though the closure is opened by pressing the sides of the cap mantle, the closure does not need to be attached to the carton package with the cap arrangement in any particular orientation about the spout axis in order to enable convenient access to the depression areas. Instead, the end user of the carton package may, prior to opening the carton package, rotate the flip cap arrangement to a position in which the depression areas are easily gripped. This particularly facilitates use of the closure in positions where space is limited, for example near the top of a gable-top package. Moreover, commonly available carton package production lines adapted for attaching screw caps may be used without any substantial modifications for attaching the child-resistant closure defined herein, which enables keeping packaging costs particularly low. The end user of the carton package can also rotate the cap arrangement to a position in which the flip cap will not, once opened, be positioned in the flow path of the pourable household chemical when pouring from the spout. The flip cap may also be configured to be held in an open position, for example by a bias in the hinge or by a cap support tongue, which facilitates pouring. The hinge may define a hinge axis transversal to the spout axis. According to embodiments, the hinge axis may be parallel to the attachment plane. The hinge may be integrally formed with the attachment ring and the flip cap. For example, the hinge may be configured as a living hinge. According to embodiments, the hinge may comprise a bending indication having a thickness of between 0,30 mm and 0,50 mm. Preferably, the fully closed position may be a liquid-tight position, in which the flip cap seals against the spout in a liquid-tight manner, to prevent leakage of liquid content such as liquid detergent or the like. Similarly, preferably, the flip cap may be rotatable about the spout axis while remaining in the liquid-tight position, and/or without breaking any auxiliary liquid-tight barrier(s) associated with the closure. Preferably, the cap arrangement is rotatable about the spout axis, in a fully closed position, at a fixed axial position along the spout axis. Preferably, the locking track extends a full turn about the spout axis so as to enable the cap arrangement to be rotatable a full turn about the spout axis in the fully closed position. The locking track may be configured as a groove. According to embodiments, the cap arrangement may be configured to provide, when the flip cap is in the fully closed position and the locking hook is positioned in the locking track, a rotation resistance torque, against rotation about the spout axis, of between 0,1 Nm and 2,0 Nm, and more preferably, of between 0,1 Nm and 1,0 Nm. This range provides an attractive balance between fluid tightness and ease of turning the cap arrangement about the spout axis. The rotation resistance torque may be measured at room temperature, i.e. 20°C. According to embodiments, the locking track may have a circumferential locking hook engagement surface which is continuous about the circumference of the spout. The absence of any interruptions of the locking hook engagement surface facilitates rotation of the cap arrangement about the spout axis with the locking hook engaging in the locking track. According to embodiments, the pouring outlet may be circular. Preferably, the pouring outlet is concentric with the spout axis. Preferably, the cap mantle extends, radially outside the spout, about the entire circumference of the spout, save for the hinge. The cap mantle may be configured as a skirt extending axially from an axial end wall of the flip cap, towards the attachment ring. According to embodiments, each of said depression areas may be indicated to the user over a respective circumferential extent of less than 70° about the spout axis, so as to guide the user to correctly position the fingers prior to pressing. Typically, the flip cap may comprise an axial end wall configured to close the pouring outlet in the closed position, and the cap mantle may extend from the axial end wall towards the attachment ring. According to embodiments, the cap mantle may have a bottom edge adjacent to the attachment ring; the bottom edge may extend in a plane perpendicular to the spout axis. Preferably, the attachment ring is permanently attached to the spout, and the flip cap is permanently attached to the attachment ring via the hinge. The spout axis defines a cylindrical coordinate system, and thereby also defines a radial direction and a circumferential direction, which may be referred to herein. The spout axis may be perpendicular to the attachment plane. As used herein, the term "ovalize" refers to a deformation of a substantially circular shape to assume a more oval shape.

According to embodiments, when the flip cap is in the fully closed position, the locking hook may extend radially into the locking track by a radial lock engagement depth, and the mantle gap may have a radial width, at each of said depression areas, of at least 0,9 times said radial lock engagement depth. According to further embodiments, the mantle gap may have a radial width, at each of said depression areas, of more than said radial lock engagement depth. Such a mantle gap may be particularly useful if the hinge is of a type which defines a mechanical weakness in the cap mantle, for example if the hinge comprises one or several slits extending into the cap mantle. The mantle gap thereby permits a depression which may be sufficient to radially move the locking hook out of the locking track in spite of an unproportional amount of the ovalization taking place at the hinge due to the local weakness of the cap mantle. According to embodiments, the radial width of the mantle gap at the depression areas may be less than six times the radial lock engagement depth. Thereby, the width of the spout is not unduly limited, which facilitates pouring. According to embodiments, the mantle gap may have a radial width, at each of said depression areas, of more than 0,7 mm.

According to embodiments, the cap mantle may have a mantle wall thickness, along its circumference between the hinge and the locking hook, of at least 0,45 mm. Such a mantle wall thickness ascertains a sufficient rigidity to obtain an oval shape of the cap mantle when pressed at the depression areas, and avoids a mere local deformation of the cap mantle without a corresponding radial movement of the locking hook. Alternatively or additionally, the cap mantle may have a mantle wall thickness of less than 0,85 mm, and more preferably, of less than 0,75 mm. This facilitates opening the closure.

According to embodiments, the cap mantle may have a uniform mantle wall thickness along its circumference between the hinge and the locking hook. The absence of locally relatively weak or strong points along the circumference of the cap mantle ascertains an oval shape of the cap mantle when pressed at the depression areas, and avoids a mere local deformation of the cap mantle without a corresponding radial movement of the locking hook. By "uniform" mantle wall thickness is intended a mantle wall thickness which does not vary by more than +/-15% along a circumferential line from the hinge to the locking hook.

According to embodiments, the cap mantle may have a circular outer shape in a cross-section perpendicular to the spout axis.

According to embodiments, the cap mantle may have a bottom edge facing the attachment ring, wherein the locking hook is positioned at the bottom edge. Such a position maximizes the radial movement of the locking hook when pressing the depression areas.

According to embodiments, the cap mantle may, at the circumferential position of the depression areas, taper away from the attachment ring. Such a shape guides the user to intuitively grip the depression areas adjacent to the free bottom edge of the cap mantle, where the cap mantle is the broadest. The cap mantle is also the softest to deform at its bottom edge, such that at this position, only a relatively lower pressing force is required for ovalizing the cap mantle. Thereby, the closure becomes easier to open. According to embodiments, each of said depression areas may have an average inclination, in relation to the spout axis, of at least 4° Thereby, a large mantle gap may be available adjacent to the bottom edge of the cap mantle. Alternatively or additionally, each of said depression areas may have an average inclination, in relation to the spout axis, of less than 12°. Thereby, any tendency of the fingers to slip in an axial direction away from the attachment ring when pressing on the depression areas is kept at an acceptable level. According to embodiments, the cap mantle may be frustoconical.

According to embodiments, the depression areas may extend all the way to a bottom edge of the cap mantle. The axial extent of the depression areas all the way to the bottom edge guides the user to grip the depression areas adjacent to the free bottom edge of the cap mantle, where the cap mantle is the softest to deform, such that at this position, only a relatively lower pressing force is required for ovalizing the cap mantle.

According to embodiments, each of said depression areas may be provided with friction protrusions, such as vertically extending friction ribs, configured to increase the friction against fingers pressing on the depression areas.

According to embodiments, the depression areas may be positioned closer to the locking hook than to the hinge. Thereby, the cap mantle will tend to be more ovalized towards the position of the locking hook than towards the hinge, which facilitates opening the closure.

According to embodiments, said locking hook may engage with the locking track, in the fully closed position of the flip cap, over a total engagement angle of between 21° and 45° about the spout axis. The locking hook may define a local reinforcement which reduces the tendency of the cap mantle to ovalize at the locking hook. However, a total engagement angle as defined above enables a strong locking engagement between the locking hook and the locking track, while still allowing an ovalization over most of the cap mantle's circumferential extent, which makes the flip cap easy to open. According to further embodiments, said locking hook may engage with the locking track over a total engagement angle of between 28° and 39°. In absolute numbers, an exemplary suitable total circumferential engagement length may be between 5 mm and 14 mm, and more preferably between 7 mm and 11 mm.

According to embodiments, said locking hook may engage with the locking track, in the fully closed position of the flip cap, to a radial lock engagement depth of at least 0,7 mm. This ascertains a strong locking engagement. It may be preferable that said locking hook engages with the locking track, in the fully closed position of the flip cap, to a radial lock engagement depth of less than 1,2 mm. This facilitates opening the closure.

According to embodiments, a lower edge of the cap mantle may be radially flush with the attachment ring at the circumferential position of the locking hook. This makes it more difficult for the user to grip the lower edge of the cap mantle and open the flip cap without first ovalizing the cap mantle by depressing the depression areas. Alternatively or additionally, it may be preferable that any axial gap between the lower edge of the cap mantle and the attachment ring, at the circumferential position of the locking hook, be less than 0,3 mm.

According to embodiments, an outer face of the cap mantle may be provided with a lift tab extending radially away from the spout axis. Preferably, the lift tab is positioned opposite to the hinge across the spout axis. Preferably, the lift tab is provided at a distance from a bottom edge of the cap mantle; for example, it may be positioned at a top edge of the cap mantle, adjacent to an axial end wall of the flip cap. According to embodiments, the cap mantle may be provided with a recess below the lift tab. Preferably, the lift tab extends radially less than 2 mm from a radially outer face of the cap mantle. This facilitates using the same production line for screw caps and tethered flip caps. According to further embodiments, the lift tab may extend radially less than 1,4 mm from the radially outer face of the cap mantle; this provides a good balance between child resistance and ease of opening.

According to embodiments, the flip cap may comprise an axial end wall configured to cover the pouring outlet in the closed position, wherein the cap mantle extends from the axial end wall towards the attachment ring, wherein the inside face of the cap mantle abuts the spout, and more specifically, the outer face of the upper end of the spout, at the axial end wall. Such a configuration may be particularly practical in combination with a frustoconical cap mantle. The axial end wall counteracts any radial deformation of the top of the cap mantle adjacent to the axial end wall, and thereby also protects the pouring outlet from being deformed. This reduces the risk of any leakage during ovalization. Moreover, the inner face of the cap mantle may also cooperate with any bore seal within the spout to squeeze the pouring outlet between the bore seal and the cap mantle, which further improves the liquid-tightness of the closure.

According to embodiments, the flip cap may comprise an axial end wall configured to close the pouring outlet in the closed position, wherein the cap mantle extends from the axial end wall towards the attachment ring, and wherein an inner face of the axial end wall, facing in an axial direction towards the attachment ring, comprises a reinforcement ring protruding from the inner face of the axial end wall between the pouring outlet and the cap mantle. Such a configuration may be particularly practical in combination with a circular-cylindrical cap mantle, thereby stabilizing the shape of the pouring outlet at a distance from the cap mantle, the distance providing room for a radial mantle gap. The reinforcement ring may counteract deformation of the axial end wall during ovalization of the cap mantle, and thereby reduces the risk of spilling during ovalization. Moreover, the reinforcement ring may cooperate with any bore seal to squeeze the pouring outlet between the bore seal and the reinforcement ring, which further improves the liquid-tightness of the closure.

According to embodiments, the locking track may be configured as a groove and the spout may comprise, on its radially inner face, a circumferential protrusion in register with the groove. Such a structure stiffens the shape of the spout and counteracts deformation when ovalizing the flip cap, which reduces the risk of leakage.

According to embodiments, the attachment ring and the hinge may define a tether link between the flip cap and the spout which is configured to withstand a tensile force of at least 12,5 N, and more preferably, of at least 25 N. Such a tether strength increases the child safety of the closure, since intentional sabotage to the tether link is rendered difficult, and e.g. a hinge which has been deliberately cut might compromise the intended function of the child-resistant features.

According to embodiments, the flip cap may be moulded of a plastic material having a Young's modulus of between 1000 MPa and 1500 MPa, and more preferably, between 1300 MPa and 1450 MPa. Such a Young's modulus facilitates obtaining an ovalization resistance and a resilience of the cap mantle which provide a good balance between child safety and ease of opening.

According to embodiments, the attachment collar may be made of thermoplastic, and the attachment face of the attachment collar may be provided with a liquefaction initiation ridge extending about the spout axis. Such a closure is particularly well suited for friction welding, such as ultrasonic welding, to the interior face of the carton package. The liquefaction initiation ridge provides an initial localization of the pressure of the attachment face onto the interior face of the of the carton package during friction welding, and thereby defines a well-defined and localized liquefaction initiation interface of the thermoplastic. Typically, the attachment face faces in the axial towards the cap arrangement. According to embodiments, the liquefaction initiation ridge may be circular. Thereby, no particular orientation of a welding tool about the spout axis is required. The liquefaction initiation ridge may be intermittent or continuous. The latter may be preferred in order to maximize liquid tightness of the ultrasonic weld joint. An exemplary suitable material for the entire closure is polypropylene. According to embodiments, the attachment collar may be circular and concentric with the spout axis. This facilitates the attachment process, since the resulting attachment interface between the closure and the carton package will be similar regardless of the orientation of the closure during the attachment process. According to embodiments, a total width of the cap arrangement in a direction perpendicular to the spout axis may be smaller than a loop width, such as a loop diameter, of the liquefaction initiation ridge in a direction perpendicular to the spout axis. Typically, a total width of the cap arrangement in a direction perpendicular to the spout axis may be smaller than a loop width of the liquefaction initiation ridge in a direction perpendicular to the spout axis.

According to embodiments, the flip cap may be releasably attached to the attachment ring via a plurality of frangible bridges. The frangible bridges may be configured to break when opening the flip cap for the first time. Thereby, the frangible bridges may be used as tamper evidence. The flip cap, the attachment ring and the frangible bridges may be integrally formed, e.g. by injection moulding. According to embodiments, the attachment ring may be sufficiently loose about the spout to enable the attachment ring to follow a rotation of the flip cap about the spout axis without breaking the frangible bridges. Thereby, the flip cap may be easily turned to a desired orientation about the spout axis without breaking the tamper evidence.

According to embodiments, the flip cap may comprise a circular bore seal extending into the spout and engaging with a radially inner face of the spout. According to further embodiments, the bore seal may have a thickness of between 0,4 mm and 0,8 mm. Such a bore seal thickness range improves liquid tightness. According to further embodiments, the bore seal may comprise a guide section configured to, when moving the flip cap from the open position to the fully closed position, guide the bore seal into the spout, wherein a radially outer face of the guide section tapers in a longitudinal direction along the spout axis towards the attachment plane. The guide section may be defined by a distal end section of the bore seal, i.e. the section of the bore seal which is the most remote from the bore seal's attachment to an axial end wall of the flip cap. According to embodiments, the bore seal may comprise a bias section configured to resiliently bias the bore seal against the radially inner face of the spout, wherein a radially outer face of the bias section tapers in a longitudinal direction along the spout axis away from the attachment plane. The bias section may be defined by a proximal section of the bore seal, i.e. a section of the bore seal which is close to the bore seal's attachment to an axial end wall of the flip cap. When combined with a guide section as defined above, the bias section may be positioned between the guide section and the axial end wall of the flip cap.

According to embodiments, the child-resistant closure may further comprise a cap support tongue adjacent to the hinge configured to, when the flip cap is open, hold the flip cap at an opening angle of at least 60°. This reduces the risk that the cap might obstruct the flow of pourable product when poured from the pouring outlet. Preferably, the opening angle is at least 75°. According to embodiments, the cap support tongue may be defined by an extension of the bore seal.

According to embodiments, the flip cap seals, when in the fully closed position, against the spout along a sealing line extending in a closed loop about the spout axis, wherein the sealing line is positioned at an axial distance from the attachment collar of at least 5 mm. This reduces the risk that the process of attaching the attachment collar to the packaging board of the carton package affect the tightness of the seal. Preferably, the sealing line is positioned at an axial distance from the attachment collar of less than 15 mm, and more preferably, of less than 12 mm. Preferably, the sealing line is liquid-tight, and the closure is free from any other liquid-tight seals between the interior and the exterior of the package. Thereby, cost and complexity of the closure may be kept low. If the closure is provided with tamper evidence such as frangible bridges, the sealing line may be in fluid communication with the interior of the package when the tamper evidence is unbroken, i.e. when the closure has never been opened. Alternatively, the child-resistant closure may further comprise, within the spout, a tear ring for tearing an impervious membrane closing the spout.

According to embodiments, the spout may be defined by a circumferential wall having a radial thickness, adjacent to the pouring outlet, of between 0,65 mm and 0,95 mm. Such a spout wall thickness range makes the spout resistant to deformation during ovalization of the cap mantle, while still enabling the shape of the spout to adapt to the shape of any bore seal, which improves liquid tightness.

According to embodiments, the closure, excluding the attachment collar, may have a height/width ratio of between 0,28 and 0,40. Such a height/width ratio is well suited for carton packages, and results in a high pourability in combination with a low profile, which does not unduly increase the transport and shop shelf volume required by the packages. For example, when applied to the top of a carton package, the closure height may affect the stacking height of a stack of carton packages. Alternatively or additionally, the cap arrangement may have an outer diameter of between 30 mm and 35 mm. Alternatively or additionally, the attachment collar may be circular with an outer diameter of between 37 mm and 42 mm, and any circular liquefaction initiation ridge, as the case may be, may have a diameter of e.g. between 38 mm and 41 mm. According to further embodiments, the attachment collar may have an outer diameter of between 39 mm and 41 mm.

According to a second aspect, there is provided a carton package comprising a household chemical, the carton package being provided with a child-resistant closure as defined hereinabove. According to embodiments, the closure may comprise a tamper evidence configured to be broken when the closure opened for the first time, wherein an inner face of the flip cap is in fluid communication with the interior of the carton package when the tamper evidence is unbroken. The carton package may be e.g. a gable-top package. According to embodiments, the carton package may enclose a volume of 2 litres or less, and/or a volume of 0,5 litres or more.

According to a third aspect, there is provided a method of producing the child-resistant closure as defined hereinabove, the method comprising injection moulding the closure in a multiple-cavity tool comprising a first moulding cavity for the spout and a second moulding cavity for the cap arrangement; and applying the cap arrangement to the spout. Thereby, the spout and the cap arrangement may be exposed to the same moulding process parameters, such that they will crimp to the same extent during solidification. This facilitates obtaining an attractive and precise balance between rotatability and liquid tightness of the cap arrangement on the spout. Moreover, the orientation of the spout and cap arrangement are predetermined when removing them from the tool, which facilitates applying the cap arrangement on the spout before orientation is lost. According to embodiments, the spout and the cap arrangement may be moulded in the same moulding shot, which even further increases the precision in the balance between rotatability and liquid tightness.

According to a fourth aspect, there is provided a method of producing a child-resistant package for household chemicals, the method comprising: providing a carton package blank having a first face which is to become an interior face of the carton package, and comprising a closure aperture; providing a child-resistant closure as defined hereinabove; inserting the spout and the cap arrangement, at an arbitrary rotation angle about the spout axis, through the closure aperture to bring an attachment face of the attachment collar in abutment with said first face; and attaching the attachment collar to said first face. The attachment collar may be attached to said first face by applying or generating heat at the interface between the attachment face of the attachment collar and said first face of the carton package blank, for example by generating friction between said attachment collar and said first face.

It is noted that embodiments of the invention may be embodied by all possible combinations of features recited in the claims. Further, it will be appreciated that the various embodiments described for the closure according to the first aspect are all combinable with carton package according to the second aspect, as well as with the methods as defined in accordance with the third and fourth aspects of the present invention, and vice versa.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a perspective view of a carton package comprising a child-resistant closure;
Fig. 2A is a perspective view of the closure of Fig. 1 prior to attachment to the carton package, the closure being in a fully closed position;
Fig. 2B is a perspective view of the closure of Fig. 2A in an open position;
Fig. 3A is a plan view of a cap arrangement of the closure of Fig. 2A with a flip cap of the cap arrangement in a non-ovalized state;
Fig. 3B is a plan view of the cap arrangement of Fig. 3A with the flip cap in an ovalized state;
Fig. 4 is a perspective view of the cap arrangement of the closure of Fig. 2A;
Fig. 5 is a perspective view of a spout and attachment collar of the closure of Fig. 2A;
Fig. 6 is a section of the closure of Fig. 2A prior to assembling the cap arrangement with the spout and attachment collar;
Fig. 7 is a section of the closure of Fig. 2A, the section plane corresponding being the same as that of Fig. 6, after assembling the cap arrangement with the spout and attachment collar;
Fig. 8 illustrates, in a section taken along the plane VIII-VIII of Fig. 7, a process of attaching the closure of Fig. 2A to a carton package blank to arrive at the carton package of Fig. 1;
Fig. 9 is a flow chart illustrating a method of producing the carton package of Fig. 1;
Fig. 10 is a flow chart illustrating a method of producing the closure of Fig. 2A; and
Fig. 11 is a section of a child-resistant closure according to a second embodiment, the section plane corresponding to that of Fig. 8.

All the figures are schematic, not necessarily to scale, and generally only show parts which are necessary in order to elucidate the embodiments, whereas other parts may be omitted.

### Detailed description of the exemplary embodiments

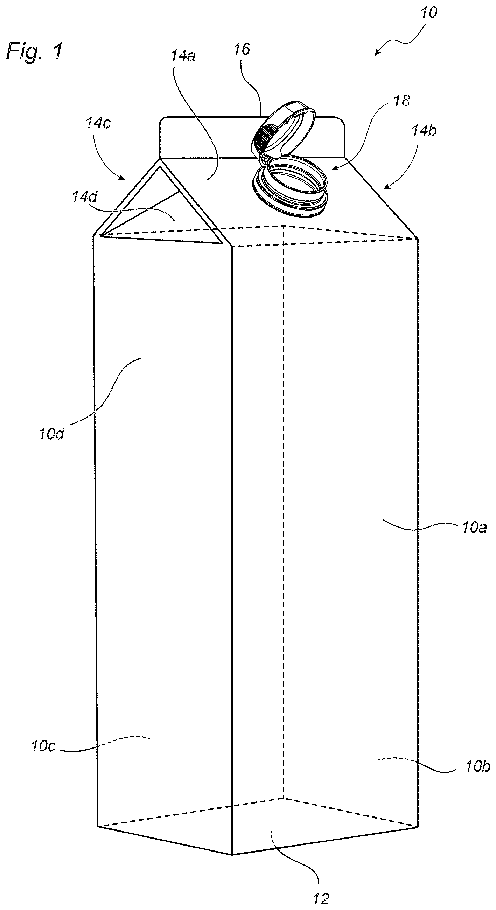

Fig. 1 illustrates a carton package 10 of gable-top type, wherein the carton package type is well known per se for holding a pourable foodstuff. The carton package 10 of Fig. 1 however differs from known foodstuff packages in that it is specifically adapted for pourable household chemicals. The carton package 10 comprises four flat, rectangular side walls 10a, 10b, 10c and 10d defining a rectangular cuboid, a flat bottom wall 12, and two flat top walls 14a, 14c extending from a pair of opposite side walls 10a, 10c and meeting each other at a top ridge 16. The respective planes of the top walls 14a, 14c are typically inclined in relation to the bottom wall by an inclination angle in the interval 30-60°. Inclined gable walls 14b, 14d extend from respective side walls, below the top walls 14a, 14c, towards the top ridge.

The walls 10a-d, 12, 14a-d are folded from a laminated packaging board comprising a structural support laminate layer of e.g. paperboard, which provides the carton package with structural integrity, and one or several barrier layers which may provide liquid tightness and/or protect the pourable product against migration through the packaging board of e.g. volatile substances from within the package, and/or migration of substances into the package which may degrade the content, such as oxidants. For example, the packaging board may comprise an innermost barrier laminate layer which makes the interior faces of the walls 10a-d, 12, 14a-d liquid-tight and protects the structural support laminate layer against being wetted by liquid content of the carton package 10. The barrier laminate layer may be made of a thermoplastic, such as polyethylene, which may also, depending on how the carton package has been folded and joined, serve as a heat-seal layer in joints where faces of the laminated packaging board meet. The packaging board may also comprise an outermost barrier laminate layer which may likewise be made of thermoplastic such as polyethylene. The outer barrier laminate layer may protect the structural support laminate layer from wetting from the outside, but may also, depending on how the carton package has been folded, serve as a heat-seal layer in joints. The laminated packaging board may also comprise one or several other barrier layers, such as an aluminium foil layer and/or an ethyl vinyl alcohol (EVOH) layer, to make the packaging board material gas-tight and suitable for long-term storage of volatile and/or sensitive products.

One of the top walls 14a is provided with a child-resistant closure 18, which is attached to an interior face of the respective top wall 14a in a manner which will be explained further below. In Fig. 1, the child-resistant closure 18 is illustrated in an open position. Thanks to the child-resistant closure, the package 10 can safely be used for household chemicals which need to be kept out of reach for children. In the following, the child-resistant closure 18 will more briefly be referred to as "the closure".

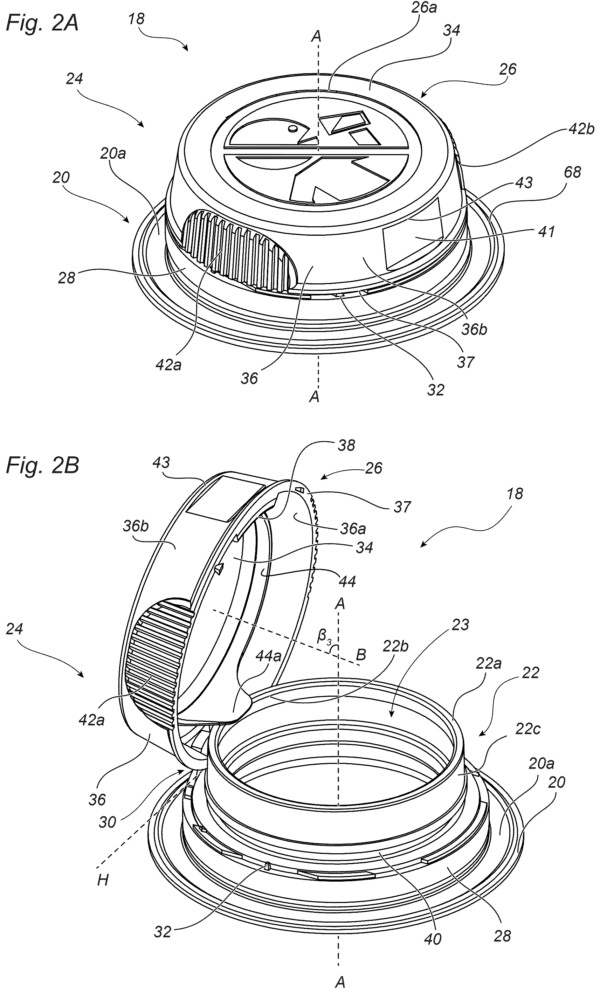

Figs 2A and 2B illustrates the closure 18 prior to being attached to the carton package 10 (Fig. 1), wherein Fig. 2A illustrates the closure 18 in a fully closed position, whereas Fig. 2B illustrates the closure 18 in an open position. The closure 18 comprises a circular attachment collar 20 having an attachment face 20a configured to be attached to an interior face of the carton package 10 (Fig. 1). The attachment collar 20 is integrally formed with a spout 22 (Fig. 2B) extending from the attachment collar along a spout axis A. The spout axis A defines a cylindrical coordinate system, with an axial or longitudinal direction along the spout axis A, a radial direction along a polar axis perpendicularly away from the spout axis, and a circumferential direction perpendicular to the radial direction, along an angular axis of the cylindrical coordinate system. The spout 22 is substantially circular-cylindrical, with its axis of symmetry coinciding with the spout axis A, and has a circular pouring outlet 23 defined by a distal rim 22a of the spout 22, which distal rim 22a faces away from the attachment collar 20. The spout 22 is also concentric with the attachment collar 20. A cap arrangement 24 comprises a flip cap 26 and an attachment ring 28. The attachment ring 28 is permanently attached to the spout 22, and the flip cap 26 is permanently attached to the attachment ring 28 via a hinge 30.

The flip cap 26 is reclosable, i.e. it is repeatedly movable between the fully closed position of Fig. 2A, in which it closes the pouring outlet 23 (Fig. 2B), and the open position of Fig. 2B, in which the pourable household chemical may be poured from the pouring outlet 23, by pivoting the flip cap 26 about a hinge axis H defined by the hinge 30. Prior to opening for the first time, the flip cap 26 is in a state in which it is attached to the attachment ring 28 via a plurality of frangible bridges 32 distributed along the flip cap's 26 interface towards the attachment ring 28. Flip cap 26, attachment ring 28, and frangible bridges 32 may be integrally formed, e.g. by moulding in a single piece. The frangible bridges 32 are broken the first time the flip cap 26 is opened, and serve as a tamper evidence. A suitable material for the cap arrangement 24, as well as the spout 22 and attachment collar 20, is polypropylene.

The flip cap 26 comprises a flat, circular axial end wall 34 provided with a pictogram 26a advising against oral consumption. An outer cap mantle 36, configured as a frustoconical skirt, extends from the axial end wall 34 in an axial direction towards the attachment ring 28, when the flip cap 26 is in the closed position, and terminates at a bottom edge 37 adjacent to the attachment ring 28. For the sake of simplicity, unless otherwise stated, any references to axial, radial or circumferential directions in relation to the cap arrangement 24 or spout 22 are with reference to the cylindrical coordinate axes defined by the spout axis A when the flip cap 26 is in the fully closed position of Fig. 2A.

An inside face 36a of the cap mantle 36 comprises, opposite to the hinge 30 across the spout 22, a locking hook 38 extending radially inwards towards the spout axis A in the closed position. The locking hook 38 is positioned at the bottom edge 37 of the cap mantle 36. A radially outer face of the spout 22 comprises a locking track 40 configured to receive the locking hook 38 when the flip cap is in the fully closed position. The locking track 40 is configured as a continuous groove extending circumferentially a full turn about the spout axis A. The cap arrangement 24 is rotatable on the spout 22 about the spout axis A with the locking hook 38 received in the locking track 40, i.e. when the flip cap 26 is in the fully closed position of Fig. 2A. The attachment ring 28 and the hinge 30 define a tether link between the flip cap 26 and the spout 22 which is configured to withstand a tensile force of 25 N when the flip cap 26 is in the fully open position of Fig. 2B.

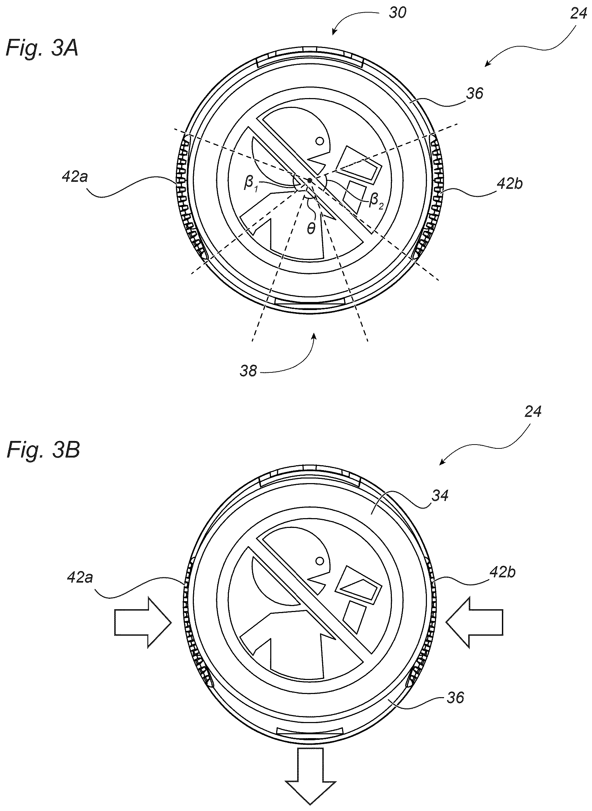

Now with reference to Figs. 3A and 3B, the cap mantle 36 further comprises, between the hinge 30 and the locking hook 38, a pair of opposing depression areas 42a, 42b, the respective extents of which are indicated by embossed friction protrusions in the outer face of the cap mantle 36. By pressing the two depression areas 42a, 42b together, the cap mantle is resiliently ovalized, i.e. assumes an oval shape as seen along the spout axis A (Fig. 2B). The ovalized state is illustrated in Fig. 3B; as illustrated, the axial end wall 34 is not substantially deformed, since it extends parallel to the direction of the applied pressure indicated by left and right arrows. The cap mantle 36, on the other hand, assumes an oval shape. The cap mantle 36 is radially separated from the spout 22 (Fig. 2B) by a mantle gap, which is not visible in the view of Fig. 3A, such that an ovalization of the cap mantle does not ovalize the spout 22 (Fig. 2B), at least not to the same extent. Thereby, when the cap mantle 36 is ovalized, the locking hook 38 (Fig. 2B) moves radially outwards in relation to the spout 22 (Fig. 2B), in a direction out of the locking track 40 (Fig. 2B), the direction being illustrated by the downwards directed arrow in Fig. 3B. When releasing the pressure on the depression areas 42a, 42b, the cap mantle 36 returns to its circular shape of Fig. 3A, again as seen along the spout axis A. The cap arrangement 24 (Fig. 2A) is moulded of a polypropylene having a Young's modulus of about 1350 MPa.

Each of the depression areas 42a, 42b is indicated to the user over a respective circumferential extent β₁, β₂ of about 55° about the spout axis A (Fig. 2A). The locking hook 38 (Fig. 2B - not visible in Fig. 3A) has a circumferential extent to engage with the locking track 40 (Fig. 2B) over a total engagement angle θ of 34° about the spout axis A. The depression areas are positioned closer, along the circumferential direction, to the locking hook 38 than to the hinge 30.

Returning to Figs 2A and 2B, in order to further facilitate opening the flip cap 26, a radially outer face 36b of the cap mantle 36 is provided with a lift tab 43 extending radially away from the spout axis A adjacent to the axial end wall 34. The lift tab 43 is defined by a recess 41 in the frustoconical shape of the flip cap 26. The flip cap 26 further comprises a circular bore seal 44 extending from the inner face of the axial end wall 34 into the spout 22, and engaging with a radially inner face 22b of the spout 22, when the flip cap 26 is in the fully closed position of Fig. 2A. The bore seal 44 defines, at the circumferential position of the hinge 30, a cap support tongue 44a configured to, when the flip cap 26 is open, rest on the distal rim 22a of the spout to hold the flip cap 26 at an opening angle β₃ of about 85° relative to the plane of the attachment collar 20, i.e. the spout axis 46 forms an angle β₃ of about 85° with an axis B normal to the axial end wall 34. Even though the cap support tongue 44a is defined by an axial extension the bore seal 44 in the illustrated embodiment, the cap support tongue 44a may alternatively be a separate structure, radially separated from the bore seal 44. As an alternative or addition to the cap support tongue 44a, the hinge 30 may be shaped to provide a bias towards an open position; such hinge designs are known per se.

The cap arrangement 24 is rotatable about the spout axis A both when in the fully closed position of Fig. 2A and when in the open position of Fig. 2B. Thereby, the user of the carton package 10 can rotate the cap arrangement 24 to any desired position about the spout axis A suitable for conveniently gripping the depression areas 42a, 42b, without being hampered by the top ridge 16 (Fig. 1), to open the flip cap 26. The user can also rotate the cap arrangement 24 to any desired position about the spout axis A suitable for pouring once the flip cap 26 has been opened. When in the fully closed position, the cap arrangement 24 is configured to provide a rotation resistance torque, against rotation about the spout axis, of about 0,5 Nm.

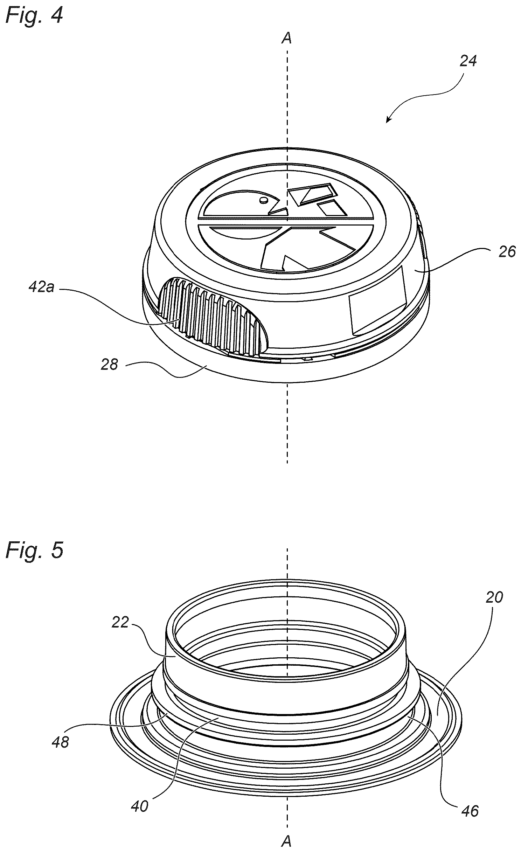

Prior to its application in a package 10 (Fig. 1), the closure 18 is assembled by pressing the cap arrangement 24 into engagement with the spout 22 along the spout axis A. Fig. 4 illustrates the cap arrangement 24 in isolation, and Fig. 5 illustrates in the integrally formed member defined by the spout 22 and attachment collar 20, prior to assembly with the cap arrangement 24 of Fig. 4. The radially outer face of the spout 22 has a circumferential ring retainment groove 46 for holding the attachment ring 28 in an axially interlocking manner, while enabling rotation about the spout axis A. The top side of the ring retainment groove 46 is axially delimited by a ring retainment ridge 48 extending circumferentially about the radially outer face of the spout 22. The ring retainment ridge 48 may be continuous, as illustrated, or intermittent.

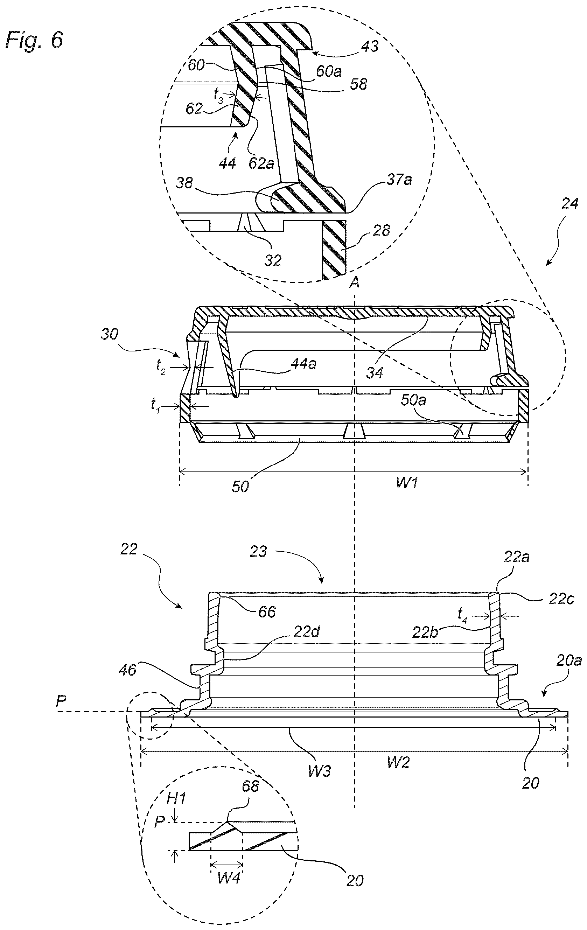

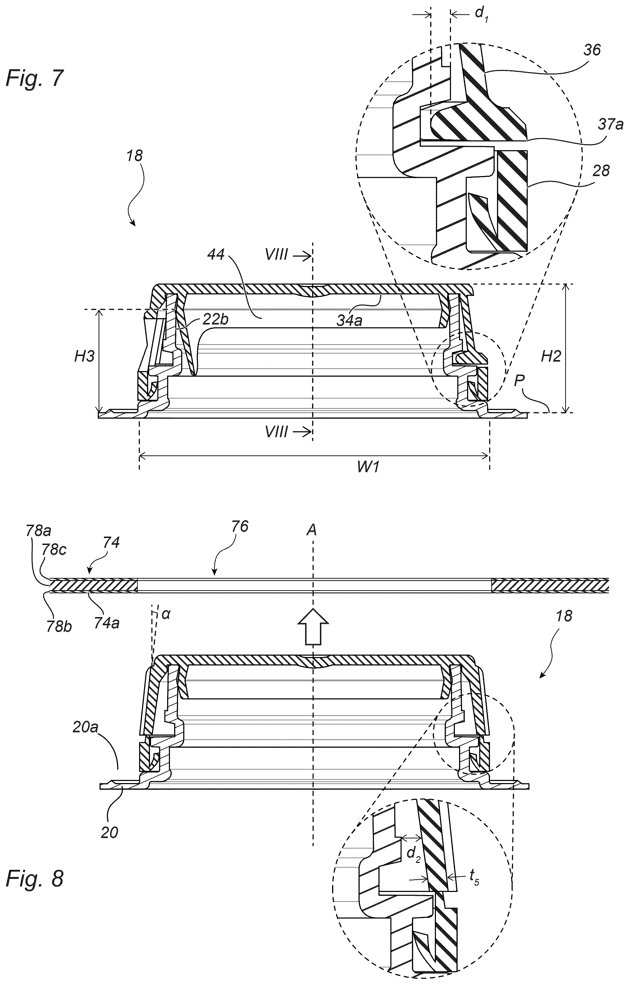

Fig. 6 illustrates the cap arrangement 24 and the spout 22 in section, the section plane comprising the spout axis A and cutting through the circumferential centre of the lift tab 43 as well as the hinge 30. An upper magnified view illustrates a portion of the cap arrangement 24, whereas a lower magnified view illustrates a portion of the attachment collar 20. The cap arrangement 24 has an outer width W1 of about 32 mm. The attachment ring 28 has a thickness t₁ of about 0,7 mm, whereas the hinge 30 is defined by a bending indication having a thickness t₂ of about 0,4 mm. The bending indication extends in the circumferential direction, and may typically have a width in the circumferential direction of between 5 mm and 15 mm, such as about 9 mm. A spout retainment collar 50 extends circumferentially about the radially inner face of the attachment ring 28, and is configured to, when assembled with the spout 22, be positioned in the ring retainment groove 46. When pressing the cap assembly 24 onto the spout 22, the spout retainment collar 50 folds radially inwards and interlocks with the ring retainment groove 46; a plurality of deformation recesses 50a are formed in the spout retainment collar 50 to facilitate folding the spout retainment collar 50 to the interlocking position (Fig. 7). The spout retainment collar 50 may be continuous, as illustrated, or intermittent. Similarly, when pressing the cap assembly 24 onto the spout 22, the locking hook 38 interlocks with a circumferential locking hook engagement surface 40a of the locking track 40 of the spout 22. The locking hook engagement surface 40a may be continuous, as apparent from the view of Fig. 5, or intermittent.

Fig. 7 illustrates the closure 18 after assembly of the cap arrangement 24 with the spout 22, and thereby illustrates the closure 18 prior to opening it for the first time. As illustrated by the magnified portion of the cap arrangement 24, the locking hook 38 extends radially into the locking track 40 by a radial lock engagement depth d1 of about 0,9 mm. At the circumferential position of the locking hook 38, the lower edge 37a of the cap mantle's 36 outer face 36b (Fig. 2B) is radially flush with the attachment ring 28, and the axial gap between the bottom edge 37 (Fig. 2B) of the cap mantle 36 and the attachment ring 28 is kept at a minimum to prevent the user from gripping the lower edge 37a without first ovalizing the cap mantle 36. The total height H2 of the closure 18, excluding the attachment collar 20, is about 12 mm, resulting in a height/width ratio H2/W1 of about 0,37, excluding the attachment collar 20. The bore seal 44 extends axially into the spout 22 and sealingly engages with the radially inner face 22b of the spout 22.

Referring back to Fig. 6, the bore seal 44 comprises a radially outermost sealing ridge 58, which liquid-tightly seals against the radially inner face 22b of the spout 22. Thereby, the flip cap 26 seals against the spout 22 along a sealing line, defined by the sealing ridge 58, which extends in a closed loop about the spout axis A at the height of the sealing ridge 58. Returning to Fig. 7, the sealing line defined by the sealing ridge 58 is positioned at an axial distance H3 of about 10 mm from the attachment collar 20. The liquid-tight seal defined by the engagement between the bore seal 44 and the inner face 22b of the spout 22 is the sole liquid-tight seal of the closure 18, such that the interior face 34a of the axial end wall 34 of the flip cap 26 is in fluid communication with the interior of the carton package (Fig. 1) already before the tamper evidence is broken.

Again referring back to Fig. 6, the bore seal 44 comprises a bias section 60, which resiliently biases the sealing ridge 58 against the radially inner face 22b of the spout 22. The bias section 60 is positioned between sealing ridge 58 and the bore seal's 44 attachment to the axial end wall 34 of the flip cap 26, and has a radially outer face 60a which tapers in a longitudinal direction along the spout axis A away from the attachment plane defined by the attachment face 20a of the attachment collar 20. The bore seal 44 further comprises a guide section 62 configured to, when moving the flip cap 26 from the open position (Fig. 2B) to the fully closed position (Fig. 2A), guide the bore seal 44 into the spout 22. For the purpose, a radially outer face 62a of the guide section 62 tapers in a longitudinal direction along the spout axis A towards the attachment plane defined by the attachment face 20a of the attachment collar 20. The guide section 62 is defined by a section of the bore seal 44 which is axially closer than the sealing ridge 58 to the attachment plane of the attachment collar 20. The bore seal 44 has a thickness t₃ of about 0,8 mm.

The circumferential wall of the spout 22 has a thickness t₄ of about 0,6 mm. The spout 22 comprises, on its radially inner face 22b, a circumferential protrusion 22d in register with the groove of the locking track 40. At the pouring outlet 23, the radially inner face 22b of the spout 22 comprises a ridge 66 extending radially towards the spout axis A. The ridge 66 is configured to, when the flip cap 26 is moved from the open position (Fig. 2B) to the fully closed position (Fig. 2A), resiliently cam over the sealing ridge 58 of the bore seal 44, and settle into a rest position against the radially outer face 60a of the bias section 60, axially between the sealing ridge 58 and the axial end wall 34. In its rest position against the radially outer face of the bore seal 44, the ridge 66 may also operate as a seal. During the last part of the flip cap's 26 axial motion towards the fully closed position, the engagement between the radially outer face 22c of the spout 22 and the inside face 36a of the cap mantle 36 gradually increases, to firmly press the spout's radially inner face 22b adjacent to the distal rim 22a of the spout 22 against the sealing ridge 58 (Fig. 5) of the flip cap 26.

The attachment collar 20 is made of thermoplastic, and is adapted to be ultrasonically welded to the interior face of the carton package 10 (Fig. 1). The attachment collar 20 has an outer width W2 of about 40 mm. The attachment face 20a, which extends along an attachment plane P, comprises a thermoplastic liquefaction initiation ridge 68 protruding in the axial direction from the attachment face 20a to a height H1 of between 0,1 mm and 0,8 mm, for example about 0,3 mm, above the attachment plane P. The liquefaction initiation ridge 68 is also made of thermoplastic, and serves for localizing the friction against the interior face of the carton package 10 (Fig. 1) during the initial phase of ultrasonic welding, in order to initiate local melting of the thermoplastic of the attachment collar 20. The liquefaction initiation ridge 68 is shaped as a circular loop with a loop width or loop diameter W3 of about 37 mm, and is concentric with the spout axis A. The total width W1 of the cap arrangement 24 is smaller than the corresponding width W3 of the liquefaction initiation ridge 68. The ridge 68 as such preferably has a ridge width W4, in the radial direction, of between 0,2 mm and 1,0 mm, for example about 0,6 mm.

Fig. 8 illustrates the closure 18 in the section plane indicated by VIII-VIII in Fig. 7. The cap mantle 36 has a thickness t₅ of about 0,65 mm; the mantle wall thickness t₅ is approximately the same along the circumferential path of the mantle wall 36 from the hinge 30 (Fig. 3A) to the locking hook 38 (Fig. 2B). The mantle gap has a radial mantle gap width d₂, at each of the depression areas, of about 0,9 mm. By virtue of being frustoconical, the cap mantle 36 tapers in a direction away from the attachment ring 28, with an inclination angle α in relation to the spout axis of about 8°.

Fig. 8 also illustrates a process of attaching the closure 18 to a carton package blank 74 of packaging board. The carton package blank 74 may be a flat blank yet to be folded into a carton package 10 (Fig. 1), or an already folded carton package blank which has just not yet been provided with a closure. In either case, the carton package blank 74 has a first face 74a which is to become an interior face of the carton package 10 (Fig. 1), and comprises a closure aperture 76 configured to receive the closure 18. The packaging board may comprise a structural support layer 78a, an inner thermoplastic barrier layer 78b, and an outer plastic barrier layer 78c. The closure 18 is inserted through the closure aperture 76 to bring the attachment face 20a of the attachment collar 20 in abutment with said first face 74a. Heat is applied to the interface between the attachment face 20a of the attachment collar 20 and said first face 74a of the carton package blank 74, for example by moving the attachment collar 20 in relation to the carton package blank 74 to generate friction heat at the interface between them, to fuse the attachment face 20 with the thermoplastic barrier layer 78b.

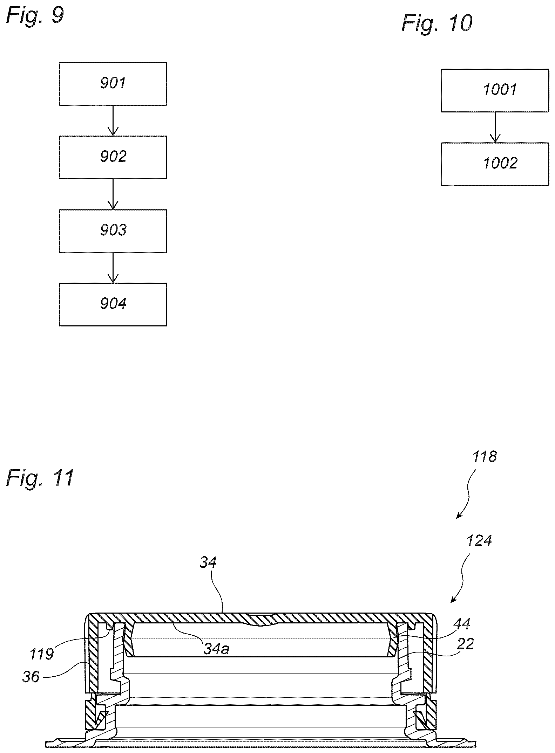

The closure 18 described in detail hereinabove is well suited for use in a carton package production line already adapted for screw caps. In particular, no specific orientation of the closures 18 about their respective spout axes A is required when the closures 18 are attached to the respective carton package blanks 74, because the flip caps 26 can be rotated to a convenient position by the user of the carton package 10 (Fig. 1) prior to opening. A method of producing a carton package, such as the carton package 10 of Fig. 1, is illustrated in the flow chart of Fig. 9 with reference to the elements illustrated in Fig. 8.

In step 901, a carton package blank 74 is provided. The carton package blank 74 has a first face 74a which is to become the interior face of the carton package 10 (Fig. 1), and comprises a closure aperture 76.

In step 902, the closure 18 is provided.

In step 903, the spout 33 and the cap arrangement 24 are inserted at an arbitrary rotation angle about the spout axis A through the closure aperture 76 to bring the attachment face 20a of the attachment collar 20 in abutment with said first face 74a. The arbitrary rotation angle may be different for different consecutive carton packages produced, and in particular, may be substantially random, due to e.g. feeding closures 18 in bulk to a carton package producing machine.

In step 904, heat is applied to attach the attachment collar 20 to said first face 74a.

The carton package blank 74 may be folded to e.g. a gable-top package 10 (Fig. 1) prior to, during, or after attaching the closure to the carton package blank 74. Different folding processes for folding and sealing of packaging board to form a carton package are well known per se to those skilled in the art, and are not described in detail herein.

Fig. 10 illustrates a method of producing the closure 18 described above.

In step 1001, the cap arrangement 24 and the spout 22 and attachment collar 20 are injection moulded in a single shot in a multiple-cavity tool comprising a first moulding cavity for the spout 22 and attachment collar 20, and a second moulding cavity for the cap arrangement 24.

In step 1002, the cap arrangement 24 is applied to the spout 22.

Fig. 11 illustrates a closure 118 according to a second embodiment. The closure 118 comprises a spout 22 identical to that described hereinabove, and a cap arrangement 124 which is identical to the cap arrangement 24 of Figs 1-8 but for two differences. The first difference is that the cap mantle 36 is not frustoconical but circular-cylindrical. The second difference is a reinforcement ring 119 protruding from the inner face 34a of the axial end wall 34, radially outside the spout 22, i.e. between the pouring outlet 23 (Fig. 2B) and the cap mantle 36. The reinforcement ring 119 counteracts deformation of the axial end wall 34 during ovalization of the cap mantle 36, and thereby reduces the risk of spilling during ovalization. Moreover, the reinforcement ring 119 cooperates with the bore seal 44 so as to squeeze the spout 22 between the bore seal 44 and the reinforcement ring 119, which further improves the liquid-tightness of the closure 118.

The invention has mainly been described above with reference to a few embodiments. However, as is readily appreciated by a person skilled in the art, other embodiments than the ones disclosed above are equally possible within the scope of the invention, as defined by the appended patent claims. For example, even though the closure 18/118 has been described in detail with reference to a gable-top package 10, it may alternatively be applied to any other suitable type of carton package, for example to the top face of a cuboid-shaped package. The spout axis A has been illustrated as being perpendicular to the attachment plane P defined by the attachment collar 20. This is not necessary. Moreover, the attachment collar 20 need not extend along a single plane P only; it could, alternatively, e.g. be shaped to follow a non-planar inner shape of the carton package. The attachment collar need not be circular. Similar to the locking track, the locking hook also does not need be continuous along the circumferential direction; it may, for example, comprise a plurality of hook elements separated by gaps. In the claims, the word "comprising" does not exclude other elements or steps, and the indefinite article "a" or "an" does not exclude a plurality.

## Claims

1. A child-resistant closure (18; 118) configured to be attached to a carton package (10) for a pourable household chemical, the child-resistant closure (18; 118) comprising
an attachment collar (20) extending along an attachment plane (P) and having an attachment face (20a) configured to be attached to an interior face (74a) of the carton package (10);
a spout (22) extending from the attachment collar (20) along a spout axis (A), the spout (22) having a circular cross-section in a plane (P) perpendicular to the spout axis (A); and
a cap arrangement (24; 124) comprising
an attachment ring (28) rotatably attached to the spout (22),
a hinge (30), and
a reclosable flip cap (26) held to the attachment ring (28) by the hinge (30), the flip cap (26) being movable between a fully closed position in which it closes a pouring outlet (23) of the spout (22), and an open position in which the pourable household chemical may be poured from the pouring outlet (23), by pivoting the flip cap (26) about the hinge (30), wherein the flip cap (26) comprises a cap mantle (36) at least partially circumferentially surrounding an outer perimeter (22c) of the pouring outlet (23) of the spout (22), wherein
an inside face (36a) of the cap mantle (36) comprises, opposite to the hinge (30) across the spout (22), a locking hook (38) extending radially inwards towards the spout axis (A), and
a radially outer face (22c) of the spout (22) comprises a locking track (40) configured to receive the locking hook (38) when the flip cap (26) is in the fully closed position, the locking track (40) extending circumferentially about the spout axis (A), wherein the cap arrangement (24; 124) is rotatable in relation to the spout (22) about the spout axis (A) with the locking hook (38) received in the locking track (40), wherein the cap mantle (36) further comprises, between the hinge and the locking hook (38), a pair of opposing depression areas (42a, 42b) separated from the spout (22) by a mantle gap (d₂) enabling the depression areas (42a, 42b) of the cap mantle (36) to be pressed towards the spout (22), such that the cap mantle (36) is resiliently ovalized and moves the locking hook (38) in a direction radially outwards from the locking track (40).

2. The child-resistant closure according to claim 1 wherein, when the flip cap (26) is in the fully closed position, the locking hook (38) extends radially into the locking track (40) by a radial lock engagement depth (d₁), and the mantle gap has a radial width (d₂), at each of said depression areas (42a, 42b), of at least 0,9 times said radial lock engagement depth (d₁).

3. The child-resistant closure according to any of the preceding claims, wherein
the cap mantle (36) has a mantle wall thickness (t₅), along its circumference between the hinge (30) and the locking hook (38), of at least 0,45 mm, and/or
the cap mantle (36) has a uniform mantle wall thickness (t₅) along its circumference between the hinge (30) and the locking hook (38).

4. The child-resistant closure according to any of the preceding claims, wherein the cap mantle (36) has a bottom edge (37) facing the attachment ring (28), and the locking hook (38) is positioned at the bottom edge (37).

5. The child-resistant closure according to any of the preceding claims, wherein
the cap mantle (36), at the circumferential position of the depression areas (42a, 42b), tapers away from the attachment ring (28), and/or
the depression areas (42a, 42b) extend all the way to a bottom edge (37) of the cap mantle (36), and/or
each of said depression areas (42a, 42b) is provided with friction protrusions, such as vertically extending friction ribs, configured to increase the friction against fingers pressing on the depression areas (42a, 42b), and/or
the depression areas (42a, 42b) are positioned closer to the locking hook (38) than to the hinge (30).

6. The child-resistant closure according to any of the preceding claims, wherein
said locking hook (38) engages with the locking track (40), in the fully closed position of the flip cap (26), over a total engagement angle (θ) of between 21° and 45° about the spout axis, and/or
said locking hook (38) engages with the locking track (40), in the fully closed position of the flip cap (26), to a radial lock engagement depth (d₁) of at least 0,7 mm.

7. The child-resistant closure according to any of the preceding claims, wherein a lower edge (37a) of the cap mantle (36) is radially flush with the attachment ring (28) at the circumferential position of the locking hook (38).

8. The child-resistant closure according to any of the preceding claims, wherein an outer face (36b) of the cap mantle (36) is provided with a lift tab (43) extending radially away from the spout axis (A).

9. The child-resistant closure according to any of the preceding claims, wherein the flip cap (26) comprises an axial end wall (34) configured to cover the pouring outlet (23) in the closed position, wherein the cap mantle (36) extends from the axial end wall (34) towards the attachment ring (28), wherein
the inside face (36a) of the cap mantle (36) abuts the spout (22) at the axial end wall (34), and/or
an inner face (34a) of the axial end wall (34), facing in an axial direction towards the attachment ring (28), comprises a reinforcement ring (119) protruding from the inner face (34a) of the axial end wall (34) between the pouring outlet (23) and the cap mantle (36).

10. The child-resistant closure according to any of the preceding claims, wherein
the locking track (40) is configured as a groove, and the spout (22) comprises, on its radially inner face (22b), a circumferential protrusion (22d) in register with the groove, and/or
the attachment ring (28) and the hinge (30) define a tether link between the flip cap (26) and the spout (22) which is configured to withstand a tensile force of at least 12,5 N, and more preferably, of at least 25 N, and/or
the flip cap (26) is moulded of a plastic material having a Young's modulus of between 1000 MPa and 1500 MPa, and more preferably, between 1300 MPa and 1450 MPa.

11. The child-resistant closure according to any of the preceding claims, wherein the attachment collar (20) is made of thermoplastic, and the attachment face (20a) of the attachment collar (20) is provided with a liquefaction initiation ridge (68) extending about the spout axis (A).

12. The child-resistant closure according to any of the preceding claims, wherein
the cap mantle (36) has a circular outer shape in a cross-section perpendicular to the spout axis (A), and/or
the flip cap (26) is releasably attached to the attachment ring (28) via a plurality of frangible bridges (32), and/or
the flip cap (26) comprises a circular bore seal (44) extending into the spout (22) and engaging with a radially inner face (22b) of the spout (22), and/or
the child-resistant closure further comprises a cap support tongue (44a) adjacent to the hinge (30) configured to, when the flip cap (26) is open, hold the flip cap (26) at an opening angle of at least 60°, and/or
the flip cap (26) seals, when in the fully closed position, against the spout (22) along a sealing line (58) extending in a closed loop about the spout axis (A), wherein the sealing line (58) is positioned at an axial distance (H3) from the attachment collar (20) of at least 5 mm, and/or
the spout (22) is defined by a circumferential wall having a radial thickness (t₄), adjacent to the pouring outlet (23), of between 0,65 mm and 0,95 m, and/or
the closure (18; 118), excluding the attachment collar (20), has a height/width ratio (H2/W1) of between 0,28 and 0,40.

13. A carton package (10) comprising a household chemical, the carton package being provided with a child-resistant closure (18; 118) according to any of the preceding claims.

14. A method of producing the child-resistant closure (18; 118) according to any of claims 1-12, comprising
injection moulding the closure (18; 118) in a multiple-cavity tool comprising a first moulding cavity for the spout (22) and a second moulding cavity for the cap arrangement (24; 124); and
applying the cap arrangement (24; 124) to the spout (22).

15. A method of producing a child-resistant package for household chemicals, the method comprising:
providing a carton package blank (74) having a first face (74a) which is to become an interior face of the carton package (10), and comprising a closure aperture (76);
providing a child-resistant closure (18; 118) according to any of the claims 1-12;
inserting the spout (22) and the cap arrangement (24; 124), at an arbitrary rotation angle about the spout axis (A), through the closure aperture (76) to bring an attachment face (20a) of the attachment collar (20) in abutment with said first face (74a); and
attaching the attachment collar (20) to said first face (74a).
